# EUROPEAN PATENT APPLICATION

(11) **EP 3 482 999 A1**
(43) Date of publication of application: **15.05.2019**
(21) Application number: 17460082.5
(22) Date of filing: 27.12.2017
(51) Int. Cl.: B60M 1/26

(54) **THE METHOD FOR CONTROL AND MONITORING OF AN OVERHEAD LINE AND A DEVICE FOR CONTROL AND MONITORING OF AN OVERHEAD LINE**

(30) Priority: 14.11.2017 PL 42345817
(71) Applicant: Maar Technology Spolka Z Ograniczona Odpowiedzialnoscia, 30-529 Krakow (PL)
(72) Inventor: The designation of the inventor has not yet been filed
(74) Representative: Magonska, Alina

(57) **Abstract**

The subject-matter of the invention is the method for remote control and monitoring of an overhead line and a device for control and monitoring of an overhead line used for integration with overhead line equipment.

The method for control and monitoring of an overhead line consisting in that the device for control and monitoring of an overhead line including a pipe insulator (1), force sensor (6), measuring insert (7) engages by means of mounting brackets (4), (5) directly to a overhead line, then by means of a measuring insert (7) overhead line parameters are measured such as voltage, tension force, temperature and analysis of the obtained results is carried out by comparing the results with setpoints, and results are sent in the established time intervals to a master system, whereas in case of exceeding the setpoints a warning signal is sent immediately.

A device for control and monitoring of an overhead line is equipped with a pipe insulator (1) in a shield (15) in the shape of a pipe ended on one end with a ferrule (2) and a mounting bracket (4) and on the other end with a ferrule (3) with a mounting bracket (5), a measuring insert (7) is mounted in the pipe insulator (1) between ferrules (2) and (3), whereas the measuring insert (7) features modules connected in series: supply and measuring system (8), resistor (9), fuse (10), measuring insert (7) is stabilised by means of a spring (11), in addition a force sensor (6) is located in a mounting bracket (4), connected on one side with electrical connection (12) with a measuring insert (7).

## Description

The subject-matter of the invention is the method for remote control and monitoring of an overhead line and a device for control and monitoring of a line used for integration with contact line equipment, particularly acting as a traction insulator, mainly performing the functions of measurement of a tensile force of contact wires and/or catenary wires of an overhead line of traction and measurement of the values and/or presence of supply voltage in such wires.

In railway overhead lines traction insulators are used in the points of anchorage of catenary wires and contact wires to support structures.
Ceramic and glass insulators for direct current network systems, as well as various structures of insulators made of plastics intended for operation under tension are widely known. Places and operating conditions for traction insulators made of organic resins mounted in tensioning devices are provided in a document of the company PKP Polskie Linie Kolejowe S.A. No. 01 1/et/2008 entitled "Overhead line equipment".
For example a Polish invention PL203257 tension traction insulator is known that has a core made of a bar or a fibre-glass pipe and an insulation shield housed in metal ferrules. Insulation shield tightly covers the surface of a bearing bar on the entire perimeter, thanks to the use of mechanical adhesion and physical properties of thermoplastic. Metal ferrules on both ends of a bearing bar are mounted using a traditional method by means of clamping or pressing.
Based on a Spanish patent application EP 2572926 a system for control and managing of tensioning of wires of a railway overhead line is known, which is equipped with a strain gauge installed as a separate element between the insulator and the tensioning system of the contact wire in the line of the contact wire deviated from a traction line. A contact wire is wound on a wheel with an electric motor. A strain gauge measures the tensioning of the contact line and the result is sent using an external cable to a monitoring cabinet. This cabinet connects wirelessly to the control centre to determine the tensioning status of each contact line section in real time, as well as its voltage. The method and system according to the invention is intended for control of the contact line along the entire line, verifying mechanical tension of the line and in case of any irregularities activating a correction using the electric motor.
Based on a German patent application WO2010006823 a device for supply of electrical energy to a monitoring cabinet is known, which is equipped with at least one tension sensor and radio transmission module. The cabinet is used for monitoring of a high-voltage line, in particular overhead railway overhead line. The device is supplied with a ring telecoil mounted on a high-voltage line.

The problem of wireless monitoring of a contact line is very important due to its extent and easy access for any third parties. Lack of rapid information on a random event, e.g. damage to the poles, results in serious complications and financial losses.
Thefts of the railway contact lines are a frequent problem when it comes to orderly functioning and maintenance in accessibility of the railway network. Undetected theft also generates costs in the form of damage to pantographs, contact lines and delays in railway services.
In turn, the complexity of the measuring equipment used in contact line reduces its resistance and operating time, which also generates major servicing problems. Power supply systems of measuring equipment require supply from an auxiliary 230VAC network or use of large, traction supply devices that are difficult to maintain.

The objective of this invention is to develop a design of a measuring device integrated with a traditional tension insulator. Measuring method is to enable both the measurement of the tension of contact wires and/or catenary wires, as well as the measurement of the values and/or presence of supply voltage in traction wires and to ensure wireless radio communication transferring data from such measurements to a master system.

The essence of the method for control and monitoring of an overhead line consists in that a device for control and monitoring of an overhead line equipped with a pipe insulator, force sensor, measuring insert is supplied directly from a overhead line by means of engagement of the device using mounting brackets directly to a overhead line, and then with the use of a measuring insert measurements of at least one of line parameters are carried out such as voltage, tension force, temperature and analysis of the obtained results is performed by comparing them with setpoints, results are sent to a master system in the established time intervals using a wireless radio communication system with communication antenna, whereas in case of exceeding the setpoints a warning signal is sent immediately.

A device for control and monitoring of an overhead line according to the invention is equipped with a pipe insulator in a shield, in the shape of a pipe ended on both sides with ferrules and a mounting bracket. A measuring insert is mounted in a pipe insulator between ferrules. The measuring insert is equipped with modules connected in series: supply and measuring system, resistor, fuse. The measuring insert is stabilised with a spring, in addition one mounting bracket is equipped with a force sensor connected from one side with the insert using electrical connection. The supply and measuring system has a data processing system supplied by a supply system, to which through a conditioning circuit, tensile force measurement system, system for detection of exceeding alert thresholds and a wireless radio communication system with antenna are connected.

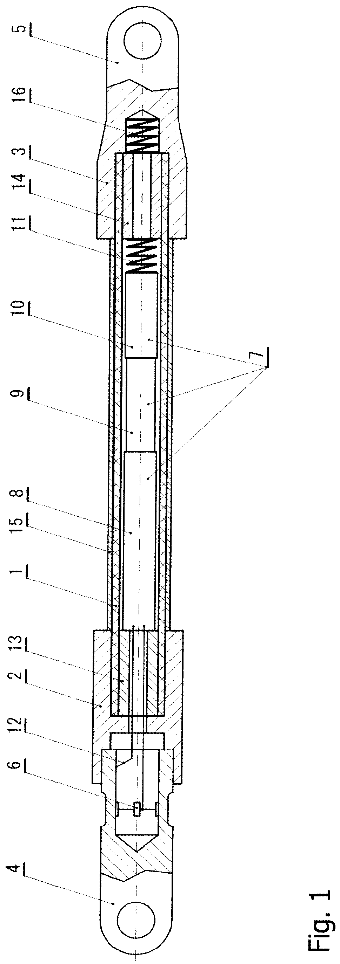

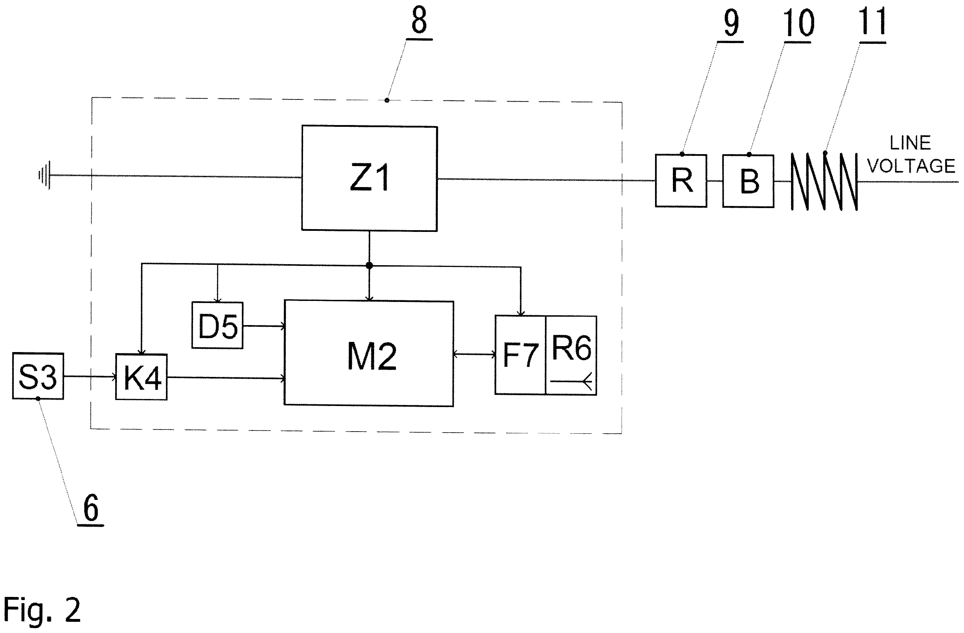

The subject-matter of the invention based on the exemplary execution is presented in the figure, in which fig.1 presents assembly cross-section of a device for control and monitoring of an overhead line, fig.2 presents a block diagram of an electronic measuring insert.
Ferrule 2 is mounted on a pipe insulator 1, to which from an internal side before ferrule an internal insert 13 was mounted, enabling to obtain adequate clamping force between elements, in particular between a pipe insulator 1 and ferrule 2.
Ferrule 3 is mounted on the other end of the pipe insulator 1, to which from an internal side before ferrule an internal insert 14 was mounted, enabling to obtain adequate clamping force between elements, in particular between the pipe insulator 1, and the ferrule 3.
Pipe insulator 1 is mounted in a shield 15.
Force sensor 6 measuring the tension force of the line is ended from one side with a mounting bracket 4, enabling assembly of the device on a contact line. Force sensor 6 is connected with ferrule 2 using a threaded connection.
Force sensor 6 comprises a bridge strain circuit that is connected using supply and signal cables, routed through the middle of the ferrule 2 and internal insert 13, to a supply and measuring system 8.
The device for control and monitoring of an overhead line is supplied from the overhead line by means of connection using a mounting bracket 4 and mounting bracket 5.
Electrical connection between a mounting bracket 4 and supply and measuring system 8 is performed by means of electrical connection 12.
On the other side the supply and measuring system 8 is electrically connected to a mounting bracket 5 through a resistor 9, fuse 10, and then a spring 11, internal insert 14 and spring 16 to the ferrule 3 ended with a mounting bracket 5.
The spring 11 is used for length expansion compensation of a pipe insulator 1 during its operation, which is under the tension of several tonnes. Such an expansion may amount to several mm.
A similar function is performed by a spring 16 that secures against no electrical connection between the internal insert 14 and ferrule 3.
A shield 15 is applied to an external side of a pipe insulator 1, which protects the pipe insulator 1 against mechanical damage and the impact of environmental conditions. This shield is made in a form of a vacuum-applied silicone coating.
Measuring insert 7 has modules connected in series: supply and measuring system 8, resistor 9, fuse 10. Measuring insert 7 is stabilised using a spring 11. Ferrule 2 features a force sensor 6 connected from one side with electrical connection 12 to a measuring insert 7.
Resistor 9 act as a voltage reducer, from traction voltage to low voltage, as a result of which low voltage is obtained on the connections of a supply and measuring system 8.
Supply and measuring system 8 is equipped with a supply and energy back-up circuit with a capacitor Z1, which feeds the conditioning circuit K4, detection system D5, data processing system with a microcontroller M2 and radio communication system F7 with an integrated communication antenna R6.
Conditioning circuit K4 is connected from one side with a strain measuring system of the tensile force S3 inside force sensor 6, and from the other side with a data processing system with a microcontroller M2. Detection system D5 is connected with data processing system M2, to which it sends the results of supply voltage measurements and/or detection of the presence of voltage in contact wires and/or catenary wires of the traction line. The results of measurements are compared to the setpoints in data processing system M2 and data transmission to a master system is performed with the use of a wireless radio communication system F7 with integrated communication antenna R6.
Components of the circuits of a supply and measuring system 8 are located on one electronic printed circuit board favourably encapsulated by casting compound to protect it against moisture and mechanical damage.
Operation back-up period in case of power failure is sufficient for sending information on occurrence of a event (damage of the network).

After switching on the traction voltage on the given section of a railway line traction voltage emerges between mounting brackets 4 and 5 of the device for control and monitoring of an overhead line directly connected to the overhead line, and by means of electrical connection and/or conductivity of the device elements a measuring insert 7 and supply and measuring system 8 are supplied. The supply and measuring system 8 measures line parameters, compares them to the setpoints in data processing system M2 and begins to periodically send the results to a base of measured variable values (tension force, presence of voltage, temperature). Furthermore the supply and measuring system 8 is equipped with a system for continuous monitoring of changes in the presence of voltage D5 and measured force value K4. After exceeding the set limit value alarm is sent, which is displayed on a user screen forcing him to respond.
Due to the point of assembly of the device within the overhead line it is not possible to mislead the monitoring system, which most often takes place in the course of cutting off the disconnector drive, as a result of which there is no power in the overhead line, while in a power substation supplying the overhead line there is information that overhead line is correctly energised.

The advantage of the device according to the invention is improvement of functionality of the currently used traction insulators by adding measurement and monitoring function. The device according to the invention mainly allows for monitoring of the condition of tension of contact wires and/or catenary wires as well as monitoring of the status of supply in contact wires. It may additionally enable to measure the ambient temperature or other meteorological parameters. It provides direct radio transfer of measurement data and alarm signals or by means of intermediary modules to a telemetric module transferring the data to a master system.
A particularly favourable situation is use of the device for verification of the presence and/or correct tension of two contact wires.
The device is supplied directly from a overhead line by means of ferrules of a pipe insulator 1, which reduces the necessity of using additional external power supplies decreasing the voltage. The device is also characterised by low power consumption. Direct supply from overhead line prevents deactivation of the monitoring system, as well as provides preview of the actual status of supply in a overhead line.
Mounting a fuse 10 in series in a supply and measuring system reduces the necessity of using fuse supports and protects overhead line, as well as measuring insert 7 against damage in case of a short-circuit.
Use of contact springs 11 and 16 in a supply and measuring system allows for compensation of length expansion of a pipe insulator 1 during its operation, which results from high tension of overhead line and ensures adequate conductivity between its components.

## Claims

1. The method for control and monitoring of an overhead line including measurement of the tension force of a overhead line **characterised in that** the device for control and monitoring of an overhead line equipped with a pipe insulator (1), force sensor (6), measuring insert (7) is supplied directly from a overhead line by engagement of the device using mounting brackets (4), (5) directly to a overhead line, then by means of a measuring insert (7) at least one of overhead line parameters is measured such as voltage, tension force, temperature and analysis of the obtained results is carried out by comparing the results with setpoints, and results are sent in the established time intervals with the use of wireless radio communication F7 with communication antenna R6 to a master system, whereas in case of exceeding the setpoints a warning signal is sent immediately.

2. A device for control and monitoring of an overhead line including a traction insulator **characterised by** being equipped with a pipe insulator (1) in a shield (15) in the shape of a pipe ended on one end with a ferrule (2) and a mounting bracket (4) and on the other end with a ferrule (3) with a mounting bracket (5), a measuring insert (7) is mounted in the pipe insulator (1) between ferrules (2) and (3), whereas the measuring insert (7) features modules connected in series: supply and measuring system (8), resistor (9), fuse (10), measuring insert (7) is stabilised by means of a spring (11), in addition a force sensor (6) is located in a mounting bracket (4), connected on one side with electrical connection (12) with a measuring insert (7).

3. A device according to patent claim 2 **characterised in that** the supply and measuring system (8) features a data processing system (M2) supplied by power circuit (Z1), to which through a conditioning circuit (K4), tensile force measurement system (S3), detection system (D5) and a wireless radio communication system (F7) with antenna (R6) are connected.
